# EUROPEAN PATENT APPLICATION

(11) **EP 4 786 381 A1**
(43) Date of publication of application: **05.08.2026**
(21) Application number: 24872830.5
(22) Date of filing: 23.09.2024
(51) Int. Cl.: B65G 17/06

(54) **CHAIN BELT CONVEYOR STRUCTURED TO PREVENT JAMMING**

(30) Priority: 27.09.2023 KR 20230130524
(71) Applicant: Alfine.Co., Ltd, Busan 47001 (KR)
(72) Inventor: YOON, Eun Jun, Busan 47269 (KR)
(74) Representative: Cabinet Chaillot
(86) International application number: PCT/KR2024/014254
(87) International publication number: WO 2025/071122

(57) **Abstract**

The present invention relates to a chain belt conveyor including joints structured in order to prevent jamming of conveyed materials. The conveyor primarily comprises frames, wherein the frame can include: a plate-shaped base; pin holes to which pins are coupled, and which are formed at each of two side ends of the base in the direction in which the frame is connected to an adjacent frame; and pin hole covers which extend from the base, and which come into close contact with the outer peripheral surfaces of the pin holes of the adjacent frame so as to cover same.

## Description

### [Technical Field]

The present invention relates to a chain belt conveyor having an improved structure, and more specifically, to a chain belt conveyor having increased durability through structural improvement.

### [Background Art]

With the advancement of modern technologies, metal materials in use have also undergone significant development. General steel materials have been widely used in the past, but recently, carbon steels containing carbon or various special steels with increased strength have been used to improve the durability of machine parts such as those of vehicles.

In order to handle materials with such increased strength, peripheral apparatuses required for product production, such as processing or transporting apparatuses, also need to be progressively improved, which has led to a significant increase in costs for modifying or manufacturing the peripheral apparatuses.

For the same reasons described above, conveyors that are mainly used to transport materials or products cannot avoid such problems. In the case of chain-type conveyors, there has been a problem that high-strength conveyed articles are jammed in gaps between chains, thereby causing damage to the conveyor itself.

In particular, there has been a problem that when a conveyor rotates in a state in which waste of high-strength materials, scrap, aggregates, or irregularly shaped fine chips generated after processing are jammed in a narrow gap between hinges of the conveyor, wear gradually occurs and the gap grows, which leads to damage.

### [Detailed Description of Invention]

### [Technical Problem]

The present invention has been devised to solve the above problems and is directed to providing a chain belt conveyor in which a structure of each component is changed to prevent a conveyed article from being jammed.

The present invention is also directed to providing a chain belt conveyor having a structure capable of preventing jamming and minimizing interference between components.

### [Technical Solution]

In order to solve the above-described technical problems, the present invention provides a conveyor formed by connecting a plurality of frames, wherein the frame includes a base having a plate shape, pinholes which are formed in both end portions of the base in a direction, in which the frame is connected to another adjacent frame and to which a pin is connected, and pinhole covers formed to extend on the base and each formed to be in close contact with and cover an outer circumferential surface of the pinhole of the other adjacent frame. The pinholes may be formed at predetermined intervals in a longitudinal direction, may each include an insertion hole that is hollow to form a closed-loop circumference, may be coupled coaxially with the pinholes of the other adjacent frame, and may be coupled such that ends of the insertion holes are in contact with each other. A plurality of pinholes may be alternatively connected in a zigzag pattern to share one pin. The pinhole cover may slide in close contact with the outer circumferential surface of the pinhole of the other adjacent frame, may form a predetermined gap with the other adjacent frame, may extend to cover at least half of a portion of the pinhole exposed upward, and may be formed to have a length that is equal to an interval between the pinholes and a length of the pinhole. An inner circumferential end of the pinhole cover may be in contact with an outer circumferential end of the pinhole. In the frame, the pinhole cover may be formed at a side opposite to a side at which the pinhole is formed, based on a traveling direction of the conveyor so that all the frames forming the conveyor have the same shape. The base may further include a reinforcing portion that extends in a longitudinal direction to have a uniform cross section and is reinforced such that a central portion thereof protrudes to have a uniform height.

### [Advantageous Effects]

A conveyor according to the present invention has an advantage in that a conveyed article can be prevented from being jammed through structural improvement, thereby minimizing wear caused by the conveyed article, extending a lifetime of the conveyor, and relatively reducing material costs of the conveyor according to the strength of the conveyed article.

In addition, a conveyor according to the present invention can be implemented by modifying an existing conveyor, thereby providing an advantage of reducing costs associated with apparatus improvement according to a material of a conveyed article.

### [Description of Drawings]

FIG. 1 is a perspective view illustrating a portion of a conveyor according to the present invention.
FIG. 2 is a perspective view illustrating a frame of the conveyor according to the present invention.
FIG. 3 is a cross-sectional view of the conveyor according to the present invention.
FIG. 4 is a perspective view illustrating a side wing of the conveyor according to the present invention.
FIG. 5 is a front view illustrating the side wing of the conveyor according to the present invention.
FIG. 6 shows perspective views and an enlarged view illustrating a frame of a conveyor according to another embodiment of the present invention.

### [Best Mode]

The present invention provides a conveyor formed by connecting a plurality of frames, wherein the frame includes a base having a plate shape, pinholes which are formed in both end portions of the base in a direction, in which the frame is connected to another adjacent frame and to which a pin is connected, and pinhole covers formed to extend on the base and each formed to be in close contact with and cover an outer circumferential surface of the pinhole of the other adjacent frame. The pinholes may be formed at predetermined intervals in a longitudinal direction, may each include an insertion hole that is hollow to form a closed-loop circumference, may be coupled coaxially with the pinholes of the other adjacent frame, and may be coupled such that ends of the insertion holes are in contact with each other. A plurality of pinholes may be alternatively connected in a zigzag pattern to share one pin. The pinhole cover may slide in close contact with the outer circumferential surface of the pinhole of the other adjacent frame, may form a predetermined gap with the other adjacent frame, may extend to cover at least half of a portion of the pinhole exposed upward, and may be formed to have a length that is equal to an interval between the pinholes and a length of the pinhole. An inner circumferential end of the pinhole cover may be in contact with an outer circumferential end of the pinhole. In the frame, the pinhole cover may be formed at a side opposite to a side at which the pinhole is formed, based on a traveling direction of the conveyor so that all the frames forming the conveyor have the same shape. The base may further include a reinforcing portion that extends in a longitudinal direction to have a uniform cross section and is reinforced such that a central portion thereof protrudes to have a uniform height.

In addition, the pinhole cover may slide in close contact with the outer circumferential surface of the pinhole of the other adjacent frame and may form a predetermined gap with the other adjacent frame.

In addition, the pinholes may be formed at predetermined intervals in the longitudinal direction, and the pinhole cover may be formed to have a length that is greater than or equal to an interval between the pinholes.

In addition, the conveyor may further include a side wing coupled in a direction perpendicular to a connection direction of the frame, and the side wing may extend to overlap another adjacent side wing.

In addition, the side wing may include a first jig and a second jig that extend from each other and form a step, and the first jig and the second jig may each include a jig hole, which is coaxial with the pinhole, formed in a lower end portion thereof.

In addition, the side wing may include an inclined portion which connects the first jig and the second jig and forms a predetermined angle.

In addition, a lower side portion of the side wing may be in contact with the inclined portion of the other adjacent side wing in a direction in which the side wing is coupled to the frame.

In addition, an upper side portion of the side wing may protrude laterally and may be adjacent to the inclined portion of the other adjacent side wing in a direction opposite to the direction in which the side wing is coupled to the frame.

In addition, an upper surface of the side wing may have a shape of which a height gradually decreases in both directions.

In addition, the side wing may further include a seating portion which protrudes from a lower portion thereof and on which the frame is seated.

In addition, the base may include a reinforcing portion that extends in a longitudinal direction and is reinforced such that a central portion thereof protrudes.

In addition, the base may further include protrusions which are distributed throughout an entire upper surface of the base and protrude upward.

In addition, the conveyor may further include a discharge hole which is formed in a side surface of the protrusion and extends to pass through the other side surface of the base on which the protrusion is formed.

In addition, the base may further include discharge holes which are distributed in an entirety of the base and pass through the base from top to bottom.

### [Modes of the Invention]

Hereinafter, the technical idea of the present invention will be described in more detail with reference to the accompanying drawings. Prior to the description, it should be understood that terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best description. Accordingly, embodiments disclosed in the present specification and configurations shown in the drawings are merely most exemplary embodiments of the present invention and do not represent all the technical ideas of the present invention, and thus it should be understood that there may be various modified examples that may substitute these at the time of filing of the present application.

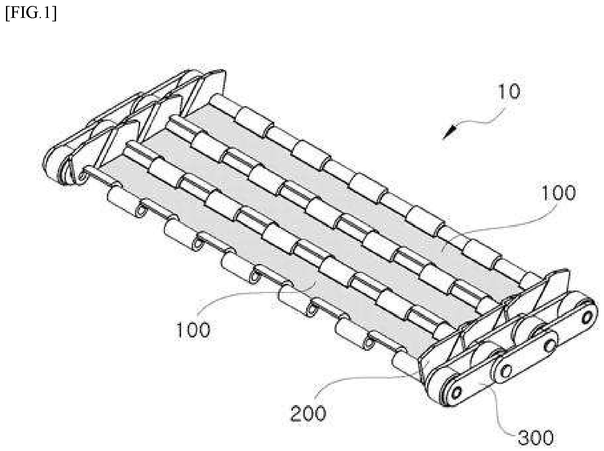

FIG. 1 is a perspective view illustrating a portion of a conveyor 10 according to the present invention. As shown, the conveyor 10 may mainly include frames 100, side wings 200, and chains.

More specifically, the conveyor 10 may include a configuration in which a plurality of units, which have the same shape and each include the frame 100, the side wing 200, and the chain 300, are connected. The frame 100 may have a form including a component that may be connected to another frame 100 adjacent to a plate-shaped component.

In addition, the side wing 200 is for preventing a conveyed article being transported on the conveyor 10 from deviating laterally or from being jammed by components positioned on a side surface of the conveyor 10. The side wing 200 may be connected to a side surface that is perpendicular to a connection direction of the plurality of connected frames 100. In this case, as shown, the plurality of the side wings 200 may be provided to overlap each other and extend.

In addition, the chain 300 may be a component coupled to a driving device such that the conveyor 10 may rotate, and may be coupled to and extend from a side opposite to a side of the side wing 200 coupled to the frame 100.

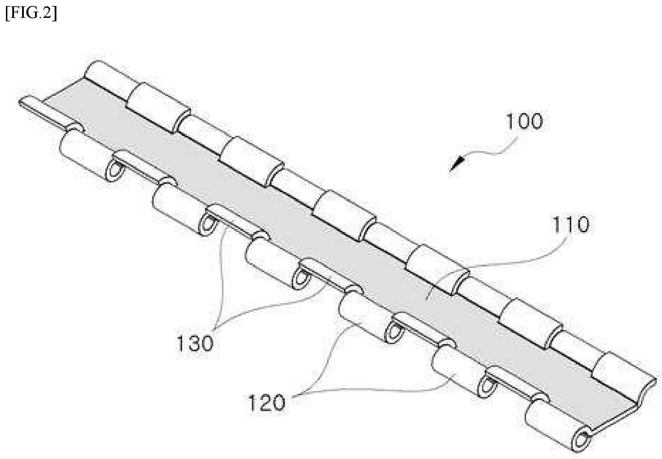

FIG. 2 is an exploded view of the frame 100 of the conveyor 10 according to the present invention. As shown, the frame 100 may include a base 110, pinholes 120, and pinhole covers 130.

More specifically, the frame 100 may include the base 110 having a flat plate shape. The base 110 may provide a space in which a conveyed article is seated.

In addition, the pinhole 120 may be a hollow component to which a pin is coupled and may be formed in each of both side end portions of the base 110 in a direction in which the frame 100 is connected to another adjacent frame 100. In this case, the pinholes 120 may be formed at predetermined intervals in a longitudinal direction and may be preferably spaced apart from each other such that central axes thereof are aligned to allow one pin to be coupled to the pinholes 120 spaced apart from each other.

In addition, the pinhole cover 130 may be formed to extend on the base 110. The pinhole cover 130 may be formed in the same direction as the pinhole 120. The pinhole cover 130 may be formed to be in close contact with and cover an outer circumferential surface of the pinhole 120 of another adjacent frame 100. That is, the pinhole covers 130 may serve to cover gaps formed between the base 110 and the pinholes 120 coupled in a zigzag pattern when the plurality of frames 100 are connected to each other. To this end, as shown, it is preferable that the pinhole cover 130 be formed to have a length that is greater than or equal to an interval between the pinholes 120 as shown.

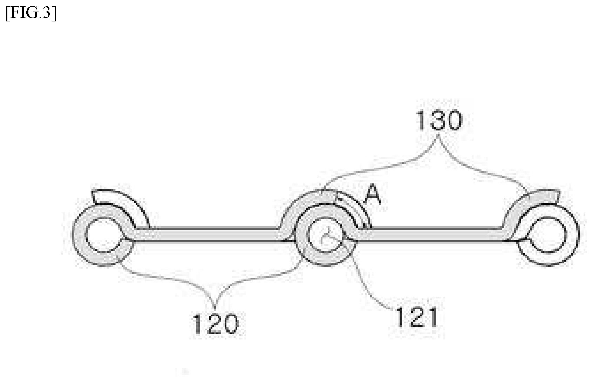

FIG. 3 is a cross-sectional view illustrating the conveyor 10 according to the present invention. As described above, in the frames 100 may be connected and coupled in a form in which the pinholes 120 formed at predetermined intervals in the longitudinal direction and the pinholes 120 of an adjacent frame 100 are engaged with each other in a zigzag pattern to align insertion holes 121, and one pin is coupled to the insertion holes 121.

In this case, it is preferable that the pinhole 120 and the insertion hole 121 be circular such that the entire conveyor 10 may flexibly change an angle while rotating.

In this case, as shown, it is preferable to form a predetermined gap A to prevent the pinhole cover 130 from interfering with another adjacent frame 100 while the conveyor 10 rotates. That is, the pinhole cover 130 may have a shape of an arc capable of being in close contact with an outer circumferential surface of the pinhole 12 and may slide on the outer circumferential surface of the pinhole 120 as the conveyor 10 rotates. In order to prevent interference during such an operation, the pinhole cover 130 may be designed to form the gap A as shown.

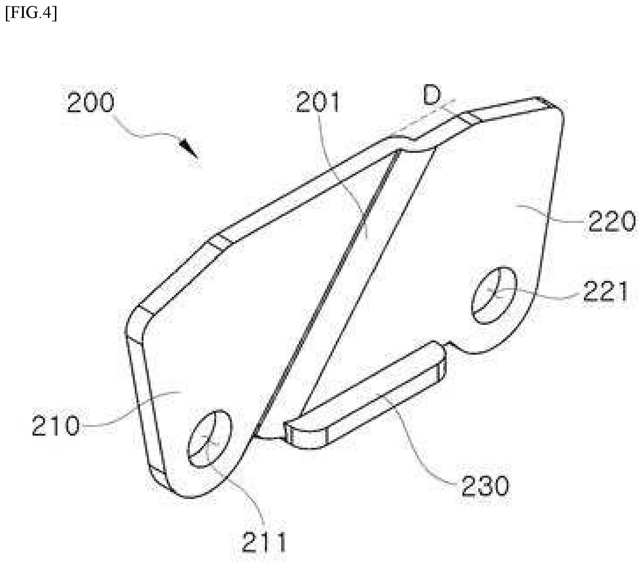

FIG. 4 is an exploded view illustrating the side wing 200 of the conveyor 10 according to the present invention. As shown, the side wing 200 may be formed in a form in which a first jig 210 and a second jig 220 extend with a step D therebetween.

More specifically, in the side wing 200, a flat plate may be bent into a stepped shape to form the step D. That is, the side wing 200 may be formed to extend from the first jig 210 to the second jig 220 so as to overlap with and be coupled to another adjacent side wing 200, and the step D may be formed to correspond to thicknesses of the first jig 210 and the second jig 220.

In this case, as an example, the side wing 200 may have jig holes 211 and 221 formed in lower end portions of the first jig 210 and the second jig 220, respectively. It is preferable that the jig holes 211 and 221 be coupled to be coaxial with the insertion holes 121 of the pinholes 120. That is, as described above, the side wing 200 may be coupled to a side portion of the frame 100 and may be coupled to the frame 100 through the pin.

In addition, the side wing 200 may have an inclined portion 201 formed at a position at which the first jig 210 and the second jig 220 are connected. The inclined portion 201 may extend in a longitudinal direction of the side wing 200 and may form a predetermined angle with upper and lower surfaces of the side wing 200. This is to prevent, when an adjacent side wing 200 coupled to the side wing 200 rotates about the jig holes 211 and 221 as the conveyor 10 rotates, interference therebetween and minimize a gap therebetween.

In addition, the side wing 200 may further include a seating portion 230 protruding from a lower portion thereof in a direction in which the frame 100 is coupled. The seating portion 230 is a portion on which the frame 100 is seated and is preferably coupled in contact with a lower surface of the frame 100. That is, the seating portion 230 is for reinforcing a gap between the frame 100 and the side wing 200 and distributing a load applied to the pin and is a component capable of making the conveyor 10 more robust.

In this case, as a modified example, the seating portion 230 may be directly connected to the frame 100. That is, in addition to being coupled by the pin as described above, the side wing 200 may be coupled to the side portion of the frame 100 in such a manner that the seating portion 230 is directly fastened to the frame 100. In such a modified example, an embodiment in which the jig holes 211 and 221 are not formed may also be included.

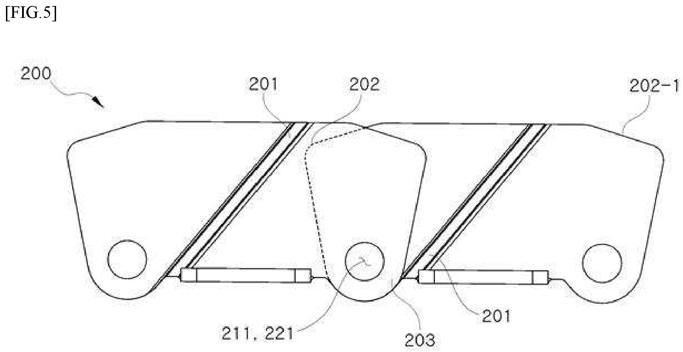

FIG. 5 illustrates a state in which the side wings 200 of the conveyor 10 according to the present invention are connected. As shown, the side wing 200 and another adjacent side wing 200 connected thereto may be coupled so as to share the pin through the jig holes 211 and 221. That is, the pin coupled to the pinhole 120 may be coupled to pass through both the jig hole 211 of the first jig 210 of the corresponding side wing 200 and the jig hole 221 of the second jig 220 of another adjacent side wing 200.

In this case, it is preferable that the jig holes 211 and 221 be formed in a circular shape such that the side wing 200 rotates about the pin. That is, the side wing 200 may rotate relative to another adjacent side wing 200 about the jig holes 211 and 221.

In this case, as described above, the side wing 200 may overlap with and be connected to another adjacent side wing 200 with a step therebetween, which may cause interference. In order to prevent the interference, the side wing 200 may further include the inclined portion 201 that forms a predetermined angle with the upper and lower surfaces of the side wing 200.

In this case, an upper side portion 202 of the side wing 200 may be formed to protrude laterally to minimize a gap with the inclined portion 201. In addition, an upper surface 202-1 of the side wing 200 may have a shape of which a height gradually decreases in both directions. Thus, when the side wing 200 rotates about the jig holes 211 and 221, a minimal gap with the inclined portion 201 of another adjacent side wing 200 can be maintained, and interference can be prevented.

In this case, it is preferable that the upper side portion 202 of the side wing 200 be adjacent to the inclined portion 201 in a direction opposite to a direction in which the side wing 200 is coupled to the frame 100. This is to prevent a conveyed article from being jammed in the above-described gap.

In addition, a lower side portion 203 of the side wing 200 may be designed to be in contact with the inclined portion 201. For the same reasons described above, such a structure is for preventing a gap, in which a conveyed article may be jammed, from being formed in an inner side in a direction in which the side wing 200 is coupled to the frame 100. The lower side portion 203 preferably has a curved shape such that, when the side wing 200 rotates about the jig hole, the inclined portion 201 of another adjacent side wing 200 may slide in contact therewith.

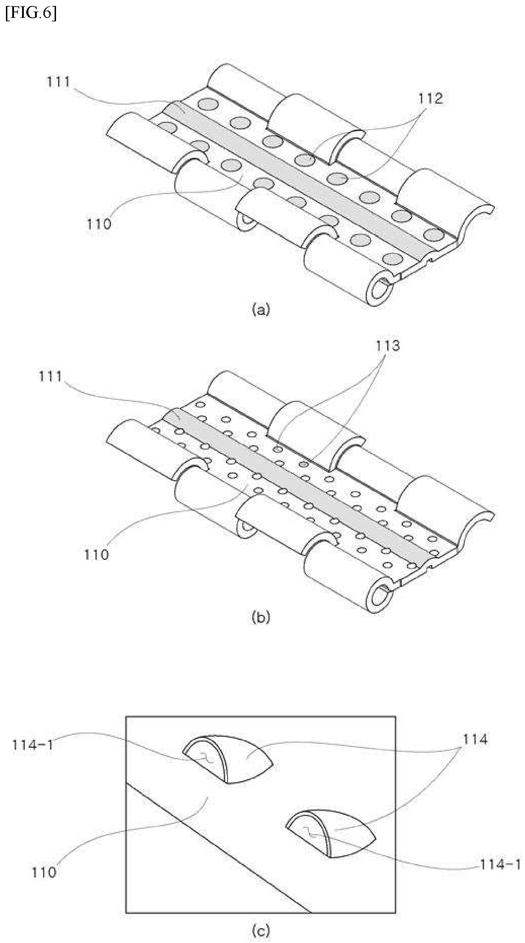

FIG. 6 illustrates a frame 100 according to another embodiment of the present invention. As shown, the frame 100 may include, on a base 110, at least one of a reinforcing portion 111, a protrusion 112, a discharge hole 113, and a protrusion/hole 114 having a form in which a protrusion and a discharge hole are coupled.

Referring to FIG. 6A, the base 110 may further include the reinforcing portion 111. The reinforcing portion 111 is for preventing twisting or bending of the entire base 110 against a force applied by a conveyed article that falls or is transported. As shown, the reinforcing portion 111 may be formed to extend in a longitudinal direction of the base 110 such that a central portion of the base 110 is thickened.

In addition, a plurality of protrusions 112 may be formed on the base 110. The protrusions 112 may be distributed throughout an upper surface of the base 110 in contact with a conveyed article and may be formed in a dimple shape. The protrusion 112 is for preventing chips generated during a cutting process or a conveyed article from being attached to the upper surface of the flat base 110 due to cutting oil or the like.

Referring to FIG. 6B, a plurality of discharge holes 113 may be formed in the base 110. The discharge hole 113 is for discharging unnecessary liquid, such as cutting oil that falls together with a conveyed article, and is preferably formed to pass through the base 110 and discharge the liquid downward.

Referring to FIG. 6C, the base 110 may include the protrusion/hole 114 (114-1) having a form in which the above-described protrusion and discharge hole are coupled. The protrusion/hole 114 (114-1) may be designed to protrude upward from the base 110 and further include a through-hole through which a liquid may be discharged downward from a protruding portion. As an example, as shown, the protrusion/hole 114 (114-1) may protrude in a hemispherical shape and may have a hole formed to pass through a side surface thereof downward.

**[Descriptions of symbols]**

| | | | |
|---|---|---|---|
| 10: | conveyor | | |
| 100: | frame | | |
| 110: | base | | |
| 111: | reinforcing portion | 112: | protrusion |
| 113: | discharge hole | | |
| 114, 114-1: | protrusion/hole | | |
| 120: | pinhole | 121: | insertion hole |
| 130: | pinhole cover | | |
| 200: | side wing | | |
| 201: | inclined portion | | |
| 202: | upper side portion | 202-1: | upper inclined portion |
| 203: | lower side portion | | |
| 210: | first jig | 220: | second jig |
| 211, 221: | jig hole | | |
| 230: | seating portion | | |
| 300: | chain | | |

### [Industrial Applicability]

The present invention relates to a chain belt conveyor having increased durability through structural improvement and has industrial applicability.

## Claims

1. A conveyor formed by connecting a plurality of frames, wherein the frame includes:
a base having a plate shape;
pinholes which are formed in both end portions of the base in a direction, in which the frame is connected to another adjacent frame and to which a pin is connected; and
pinhole covers formed to extend on the base and each formed to be in close contact with and cover an outer circumferential surface of the pinhole of the other adjacent frame,
wherein the pinholes are disposed at predetermined intervals in a longitudinal direction and connected in a zigzag pattern,
the pinhole cover slides in close contact with the outer circumferential surface of the pinhole of the other adjacent frame, and
in the frame, the pinhole cover is formed at a side opposite to a side at which the pinhole is formed, based on a traveling direction of the conveyor so that all the frames forming the conveyor have the same shape.

2. The conveyor of claim 1, wherein an inner circumferential end of the pinhole cover is in contact with an outer circumferential end of the pinhole.

3. The conveyor of claim 2, wherein the pinhole includes an insertion hole that is hollow to form a closed-loop circumference, and is coupled coaxially with the pinhole of the other adjacent frame.

4. The conveyor of claim 3, wherein the pinhole cover extends to cover at least half of a portion of the pinhole exposed upward and is formed to have a length that is equal to an interval between the pinholes and a length of the pinhole.

5. The conveyor of claim 4, wherein the base further includes a reinforcing portion that extends in a longitudinal direction to have a uniform cross section and is reinforced such that a central portion thereof protrudes to have a uniform height.

6. The conveyor of claim 1, further comprising a side wing coupled in a direction perpendicular to a connection direction of the frame,
wherein the side wing extends to overlap another adjacent side wing.

7. The conveyor of claim 6, wherein the side wing includes a first jig and a second jig that extend from each other and form a step, and
the first jig and the second jig each include a jig hole, which is coaxial with the pinhole, formed in a lower end portion thereof.

8. The conveyor of claim 7, wherein the side wing includes an inclined portion which connects the first jig and the second jig and forms a predetermined angle.

9. The conveyor of claim 8, wherein a lower side portion of the side wing is in contact with the inclined portion of the other adjacent side wing in a direction in which the side wing is coupled to the frame.

10. The conveyor of claim 9, wherein an upper side portion of the side wing protrudes laterally and is adjacent to the inclined portion of the other adjacent side wing in a direction opposite to the direction in which the side wing is coupled to the frame.

11. The conveyor of claim 10, wherein an upper surface of the side wing has a shape of which a height gradually decreases in both directions.

12. The conveyor of claim 6, wherein the side wing further includes a seating portion which protrudes from a lower portion thereof and on which the frame is seated.

13. The conveyor of claim 1, wherein the base further includes protrusions which are distributed throughout an entire upper surface of the base and protrude upward.

14. The conveyor of claim 13, further comprising a discharge hole which is formed in a side surface of the protrusion and extends to pass through the other side surface of the base on which the protrusion is formed.

15. The conveyor of claim 1, wherein the base further includes discharge holes which are distributed in an entirety of the base and pass through the base from top to bottom.
